# EUROPÄISCHE PATENTSCHRIFT

(11) **EP 2 295 812 B1**
(45) Veröffentlichungstag und Bekanntmachung des Hinweises auf die Patenterteilung: **04.03.2015**
(21) Anmeldenummer: 10005544.1
(22) Anmeldetag: 28.05.2010
(51) Int. Cl.: F04D 19/04, F04D 29/54, F04D 29/058, F16C 39/06

(54) **Vakuumpumpe**
Vacuum pump
Récipient repliable

(30) Priorität: 30.07.2009 DE 102009035332
(43) Veröffentlichungstag der Anmeldung: 16.03.2011
(73) Patentinhaber: PFEIFFER VACUUM GMBH, 35614 Asslar (DE)
(72) Erfinder: Hofmann, Jan, 35305 Grünberg (DE); Zipp, Andreas, 79576 Weil am Rhein (DE)
(74) Vertreter: Knefel, Cordula

(56) Entgegenhaltungen:
- EP-A2- 0 867 627
- EP-A2- 1 484 508
- WO-A1-02/27189
- WO-A1-2004/068099
- WO-A1-2006/048603
- WO-A2-2006/048602
- DE-A1- 10 022 062
- GB-A- 180 991
- GB-A- 2 420 379
- JP-A- 2002 138 988
- US-A- 5 341 671
- US-A- 5 394 044
- US-A1- 2003 175 114
- US-B1- 6 412 173

## Beschreibung

Die Ereindung betrifft eine Vakuumpumpe nach dem Oberbegriff des ersten Anspruchs.

In einigen Bereichen der Vakuumtechnik gibt es Kammersysteme, in denen mehrere miteinander verbundene Kammern seriell angeordnet sind und jede der Kammern auf einem anderen Druckniveau gehalten wird. Solch ein Aufbau ist beispielsweise in Massenspektrometern üblich. Ein Teilchenstrahl tritt bei diesen in die Kammer mit dem höchsten Druck ein und durchsetzt in der Folge die anderen Kammern, um schließlich in der Kammer mit dem niedrigsten Druck zu einem Analysator zu gelangen. Die Kammer mit dem niedrigsten Druck befindet sich auf Ultrahochvakuumniveau, die Kammer mit dern höchsten Druck auf Vorvakuumniveau im Grob- und Feinvakuumbereich.

Zum Evakuieren solcher Kammersysteme haben sich so genannte Splitflowpumpen durchgesetzt. Sie besitzen ein Gehäuse, welches einen ersten Einlass und einen zweiten Einlass aufweist, sowie eine erste und eine zweite Pumpstufe. Die Splitflowpumpe ist derart gestaltet, dass Gas durch den ersten Einlass in die erste Pumpstufe gelangt, und dass Gas, welches durch den zweiten Einlass in die zweite Pumpstufe gelangt, zunächst von der zweiten und nachfolgend von der ersten Pumpstufe verdichtet wird.

Die DE 4331589 A1 stellt eine solche Vakuumpumpe vor. Die Pumpstufen für den Hochvakuum- und Ultrahochvakuumbereich sind als Turbomolekularpumpstufen gestaltet, wobei jede Pumpstufe mehrere so genannte Rotor-Stator-Pakete besitzt. Es besteht der Wunsch, diese Vakuumpumpe kompakter zu gestalten.

Weiterer Stand der Technik ist in den folgenden Dokumenten beschrieben:
Die WO 2006/048602 A2 betrifft eine Pumpanordnung, die eine Vakuumpumpe mit mehreren turbomolekularen Pumpstufen aufweist. Diesen Pumpstufen im Gasstrom folgend sind Holweckpumpstufen und wahlweise Seitenkanalpumpstufen vorgesehen.
Die US 5 341 671 A betrifft einen Heliumlecksucher mit einer Molekularpumpe. Diese weist einen rotierenden Zylinder auf, an dessen Innen- und Außenseite entlang Gas gefördert wird. Am freien Ende des Zylinders ist ein Gaseinlass vorgesehen.
Die WO 2006/048603 A1 ähnelt in der Funktion der US 5 341 671 A und erweitert deren Lösung auf mehrere koaxial zueinander angeordnete Zylinder.
Die WO 2004/068099 A1. betrifft ein Lecksuchgerät mit einer Vakuumpumpe, die einen turbomolekularer Pumpabschnitt und eine Holweckpumpstufe umfasst. Gaseinlässe in den turbomolekularen Pumpabschnitt und in die Holweckpumpstufe sind vorgesehen.

Es ist daher Aufgabe der Erfindung, eine Vakuumpumpe bereitzustellen, die das Evakuieren eines Kammersystems mit mehreren auf unterschiedlichem Druckniveau befindlichen Kammern erlaubt und dabei kompakt ist.

Gelöst wird diese Aufgabe durch eine Vakuumpumpe mit den Merkmalen des ersten Anspruchs. Die abhängigen Ansprüche 2 bis 5 geben vorteilhafte Weiterbildungen an.

Die zweite Pumpstufe, welche dem Ultrahochvakuumdruckbereich zugeordnet ist, weist eine Holweckstufe auf, die aufgrund dieser Anordnung die Kammern mit den niedrigsten Drücken evakuiert. Diese Nutzung der Holweckstufe, die im Stand der Technik üblicherweise zur Erhöhung der Vorvakuumbeständigkeit und daher im Gasstrom einer Turbomolekularpumpstufe nachfolgend vor dem Auslass der Vakuumpumpe eingesetzt wird, ermöglicht ein sehr hohes Druckverhältnis zwischen erstem und zweitem Einlass. Das Druckverhältnis ist höher als bei einer Turbomolekularpumpstufe mit gleicher Baulänge. Somit wird bei gleichem Druckverhältnis die zweite Pumpstufe gegenüber einer Turbomolekularpumpstufe kompakter gebaut.

Eine noch kompaktere Gestaltung ergibt sich in der Weiterbildung nach Anspruch 2, nach der die Holweckstufe ein Lager der Welle umgibt.

Das Merkmal nach Anspruch 3, einen weiteren Einlass derart an Holweckpumpstufe anzuordnen, dass durch ihn Gas in die Holweckpumpstufe einströmt, erlaubt, bei kompakter Bauform eine zusätzliche Vakuumkammer zu evakuieren.

In eine anderen Weiterbildung ist vorgesehen, den Stator der Holweckpumpstufe und das Lager um einen Durchhangabstand exzentrisch zueinander anzuordnen. Hierdurch werden zum einen engere Spaltmaße erreicht. Diese verbessern das erreichte Druckverhältnis, so dass Baulänge eingespart und die Vakuumpumpe daher kompakter wird. Zum anderen erlaubt dies den Einsatz eines schmiermittelfreien Magnetlagers, insbesondere Permanentmagnetlagers, zur Lagerung der Welle im Ultrahochvakuumbereich.

Nach einer wiederum anderen Weiterbildung ist zwischen zweitem Einlass und Holweckpumpstufe ein Strömungswiderstand, insbesondere eine ruhende Turboscheibe, angeordnet. Der Strömungswiderstand ist dabei höher bemessen als das Saugvermögen der Holweckstufe, so dass Rückströmung aus der Holweckstufe reduziert wird. Dies erlaubt eine kürzere Bauweise der Holweckstufe, so dass die Vakuumpumpe noch kompakter wird.

Anhand von Ausführungsbeispielen soll die Erfindung und ihre Weiterbildungen näher erläutert und die Darstellung ihrer Vorteile vertieft werden. Es zeigen:
- Fig. 1:: Schnitt durch eine Vakuumpumpe mit zwei Einlässen gemäß einem ersten Ausführungsbeispiel.
- Fig. 2:: Schnitt durch eine Vakuumpumpe mit fünf Einlässen gemäß einem zweiten Ausführungsbeispiel.
- Fig. 3:: Schnitt durch eine Weiterbildung der hochvakuumseitigen Holweckstufe, die parallel pumpend ausgeführt ist.
- Fig. 4:: Schnitt durch eine Weiterbildung der hochvakuumseitigen Holweckstufe, die seriell pumpend ausgeführt ist.
- Fig. 5:: Schnitt entlang der Längachse durch die Hälfte einer Holweckpumpstufe.

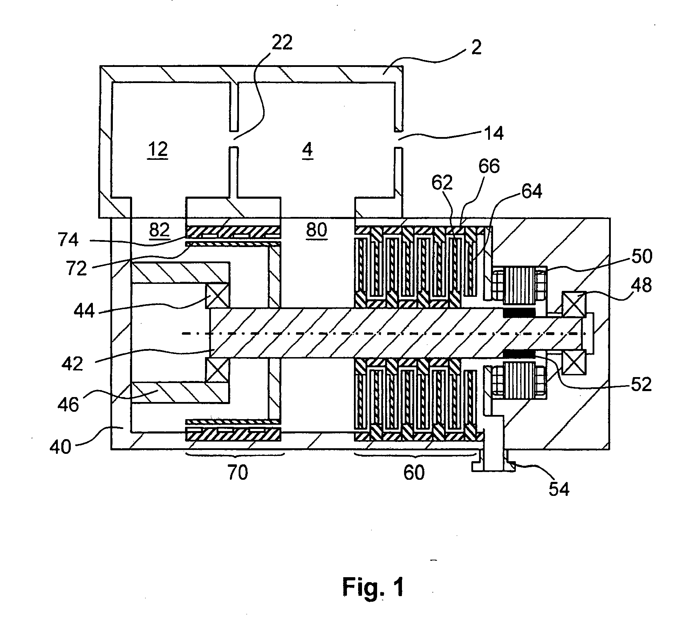

In Fig. 1 sind eine Vakuumpumpe und ein Kammersystem im Längsschnitt gemäß einem ersten Beispiel gezeigt. Im Kammergehäuse 2 sind eine Vorvakuumkammer 4 und eine Hochvakuumkammer 12 vorgesehen, welche über eine Hochvakuumblende 22 miteinander verbunden sind. Durch eine Vorvakuumblende 14 kann beispielsweise ein Teilchenstrahl in die Vorvakuumkammer gelangen.

Mit dem Kammergehäuse ist das Pumpengehäuse 40 einer Vakuumpumpe vakuumdicht und lösbar verbunden. In dem Pumpengehäuse ist eine Welle 42 angeordnet, welche von einem hochvakuumseitigen Lager 44 und einem vorvakuumseitigen Lager 48 drehbar unterstützt wird. Auf der Welle ist ein Permanentmagnet 52 vorgesehen, der mit dem magnetischen Feld einer Antriebsspule 50 zusammenwirkt und damit die Welle in schnelle Drehung versetzt. Schnell bedeutet im Rahmen einer solchen Vakuumpumpe, dass die pumpaktiven Bauteile Pumpwirkung aufgrund molekularer Mechanismen entfalten und die Drehzahl bei einigen Zehntausend Umdrehungen pro Minute liegt.

Die Vakuumpumpe weist einen ersten Einlass 80 und einen zweiten Einlass 82 auf. Der erste Einlass ist mit der Vorvakuumkammer 4 verbunden, während der zweite Einlass mit der Hochvakuumkammer 12 verbunden ist. Das durch den ersten Einlass 80 in die Vakuumpumpe eintretende Gas gelangt in die erste Pumpstufe 60, welche durch ihre Pumpwirkung die Vorvakuumkammer auf ein erstes Druckniveau evakuiert. Die erste Pumpstufe ist als Turbomolekularpumpstufe gestaltet und weist daher jeweils mit einem Schaufelkranz versehene Rotorscheibe 62 und Statorscheibe 64 auf. Diese sind durch einen Distanzring 66 axial beabstandet. Die erste Pumpstufe kann eine Mehrzahl von Rotor- und Statorscheiben umfassen, je nach gefordertem Druckverhältnis zwischen Ansaugbereich und Ausstoßbereich der Pumpstufe. Das Gas wird von der ersten Pumpstufe an den Auslass 54 der Pumpe übergeben und verlässt durch diesen die Vakuumpumpe.

Durch den zweiten Einlass 82 tritt Gas aus der Hochvakuumkammer 12 in die Vakuumpumpe und wird von der zweiten Pumpstufe 70 abgepumpt. Diese Pumpstufe evakuiert die Hochvakuumkammer auf ein zweites Druckniveau, welches unterhalb des ersten Druckniveaus liegt. Das von der zweiten Pumpstufe ausgestoßene Gas wird von der ersten Pupmstufe weitergefördert.

Durch diesen Aufbau wird erreicht, dass die Vakuumpumpe derart gestaltet ist, dass Gas durch den ersten Einlass in die erste Pumpstufe gelangt, und dass Gas, welches durch den zweiten Einlass in die zweite Pumpstufe gelangt, zunächst von der zweiten und nachfolgend von der ersten Pumpstufe verdichtet wird

Die zweite Pumpstufe ist als Holweckpumpstufe gestaltet und weist daher einen Holweckstator 74 auf, welcher im wesentlichen einen dickwandigen Hohlzylinder mit gewindeartig an seiner Innenseite verlaufenden Kanälen mit viereckigem Querschnitt umfasst. Innerhalb dieses Zylinders läuft ein mit der Welle verbundener Holweckzylinder 72. Dieser umgibt wenigstens teilweise das hochvakuumseitige Lager 44 und den Lagerträger 46, der dieses Lager am Pumpengehäuse fixiert.

Durch die Gestaltung der zweiten Pumpstufe als Holweckpumpstufe kann der Abstand zwischen den Einlässen 80 und 82 verringert werden oder auf gleicher Baulänge ein größeres Druckverhältnis erreicht werden. Die Vakuumpumpe wird somit kompakter. Dieser Effekt wird verstärkt, indem das Lager innerhalb des Holweckzylinders angeordnet ist. Außerdem ergibt sich die Möglichkeit, die Welle zu verkürzen, denn der wellenseitige Holweckzylinder kann vorteilhaft über das Wellenende hinausragen. Die Welle ist somit kürzer als bei einer Gestaltung der zweiten Pumpstufe nach Bauart einer Turbomolekularpumpe. Eine kürzere Welle ist von Vorteil, da die absolute Wellenausdehung bei Temperaturerhöhung geringer ist und somit vakuumtechnisch vorteilhafte engere axiale Spalte zwischen Rotor- und Statorscheiben und anderen pumpaktiven Elementen vorgesehen werden können. Eine kürzere Welle führt außerdem zu einer kompakten Bauweise.

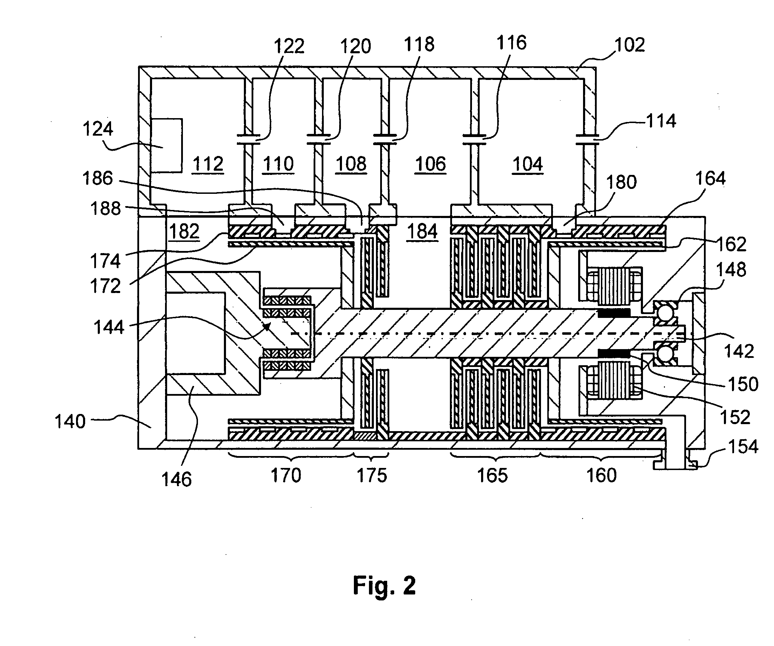

In Fig. 2 sind eine Vakuumpumpe und ein Kammersystem im Längsschnitt gemäß einem zweiten Beispiel gezeigt. Im Kammergehäuse 102 sind nun neben der Vorvakuumkammer 104 und der Hochvakuumkammer 112 drei mittlere Kammern 106, 108 und 110 angeordnet. Die Kammern sind untereinander durch Blenden 116, 118, 120 und 122 verbunden. Die Vorvakuumkammer weist zusätzlich eine Vorvakuumblende 114 auf. Durch diese Blenden kann beispielsweise ein Teilchenstrahl die Kammern durchsetzen, gelangt dabei in zunehmend tieferes Vakuum und trifft schließlich auf einen Detektor 124.

Mit dem Kammergehäuse ist vakuumdicht und lösbar das Pumpengehäuse 140 einer Vakuumpumpe verbunden. Sie ist dabei so angeordnet, dass ihr Einlass 180 mit der Kammer 104, ihr Einlass 184 mit der Kammer 106, ihr Einlass 186 mit Kammer 108, ihr Einlass 188 mit Kammer 110 und schließlich ihr Einlass 182 mit der Kammer 112 verbunden ist, wobei jede Verbindung den Gasfluss von Kammer in die Vakuumpumpe ermöglicht.

Innerhalb des Pumpengehäuses ist eine Welle 142 vorgesehen, welche vorvakuumseitig von einem Wälzlager 148 drehbar unterstützt wird. Hochvakuumseitig trägt ein Permanentmagnetlager 144 die Welle. Der Stator dieses passiven Magnetlagers stützt sich über einen Lagerträger 146 im Pumpengehäuse ab. Die Welle weist einen oder mehrere Permanentmagneten 150 auf, der mit dem von einer oder mehreren Spulen 152 erzeugten magnetischen Drehfeld zusammenwirkt und die Welle in schnelle Drehung von einigen zehntausend Umdrehungen pro Minute versetzt.

Die Vakuumpumpe weist mehrere Pumpstufen auf. Eine erste Pumpstufe 160 ist als Holweckpumpstufe gestaltet. Ihr Holweckstator 164 umfasst einen dickwandigen Hohlzylinder, dessen Innenwand mit gewindeartigen Kanälen mit viereckigem Querschnitt versehen ist. Ein Holweckzylinder 162 ist mit der Welle verbunden und befindet sich koaxial innerhalb des Holweckstators. Der Ansaugbereich dieser Pumpstufe ist derart mit dem Einlass 180 verbunden, das Gas aus der Kammer in die Pumpstufe gelangt. Das in der Pumpstufe verdichtete Gas wird durch den Auslass 154 aus der Vakuumpumpe ausgestoßen und an eine nicht gezeigte Vorvakuumpumpe, beispielsweise eine Membranpumpe, übergeben.

Im Gasstrom vorgelagert befindet sich die Pumpstufe 165, welche als Turbomolekularpumpstufe gestaltet ist. Sie besitzt, wie anhand des ersten Beispieles zu Figur 1 dargestellt, mit Schaufelkränzen versehene Rotor- und Statorscheiben. Die Zahl der Rotor-Stator-Paare hängt vom gewünschten Druckverhältnis ab. Die Pumpstufe 165 nimmt Gas vom Einlass 184 entgegen und stößt Gas in Richtung der ersten Pumpstufe 160 aus. Sie saugt zudem Gas an, welches von einer weiteren Pumpstufe 175 ausgestoßen wird. Diese besitzt einen molekularen Wirkmechanismus, vorzugsweise umfasst sie wenigstens eine Rotor- und eine Statorscheibe nach turbomolekularer Bauart. Diese Pumpstufe saugt Gas über den Einlass 188 aus der Kammer 108 an, zudem fördert sie das aus einer Pumpstufe 170 ausgestoßene Gas. Die Vakuumpumpe ist somit derart gestaltet, dass jede im Gasstrom nachfolgende Pumpstufe eine Kammer evakuiert und das Gas weiterfördert, welches von der ihr vorgelagerten Pumpstufe ausgestoßen wird.

Die zweite Pumpstufe 170 umfasst einen mit der Welle verbundenen Holweckzylinder 172, der sich innerhalb eines Holweckstators 174 befindet und mit diesem zusammenwirkt. Sie saugt Gas über den Einlass 182 aus der Kammer 112 an. Zudem ist der Holweckstator mit einem Zugang versehen, der es erlaubt, über den Einlass 188 Gas in die zweite Pumpstufe 170 anzusaugen.

Vorteilhaft umgeben die pumpaktiven Bauteile der zweiten Pumpstufe, im wesentlichen der Holweckstator 174 und der Holweckzylinder 172, die Komponenten des Permanentmagnetlagers 144. Hierdurch wird eine sehr kompakte Bauweise erreicht. Zugleich erlaubt der Einsatz einer Holweckpumpstufe, ein hohes Druckverhältnis jeweils zwischen den Einlässen 182, 188 und 186 zu erreichen. Es ist somit möglich, mit einer kompakten Vakuumpumpe mehr Kammern als bisher differentiell zu evakuieren. Für ein System mit fünf Kammern wäre im Stand der Technik eine zweite Vakuumpumpe unumgänglich, da Turbomolekularpumpstufen axial lang bauen und daher die Welle einer einzigen Vakuumpumpe zu lang würde. Die Länge der Welle wird durch die thermische Ausdehung begrenzt, die zu einem Aufzehren der Axialspalte in einer Turbomolekularpumpe führt. Damit besteht die Gefahr eines Rotor-Stator-Kontaktes. Diese Gefahr wird in durch die gezeigte Vakuumpumpe umgangen.

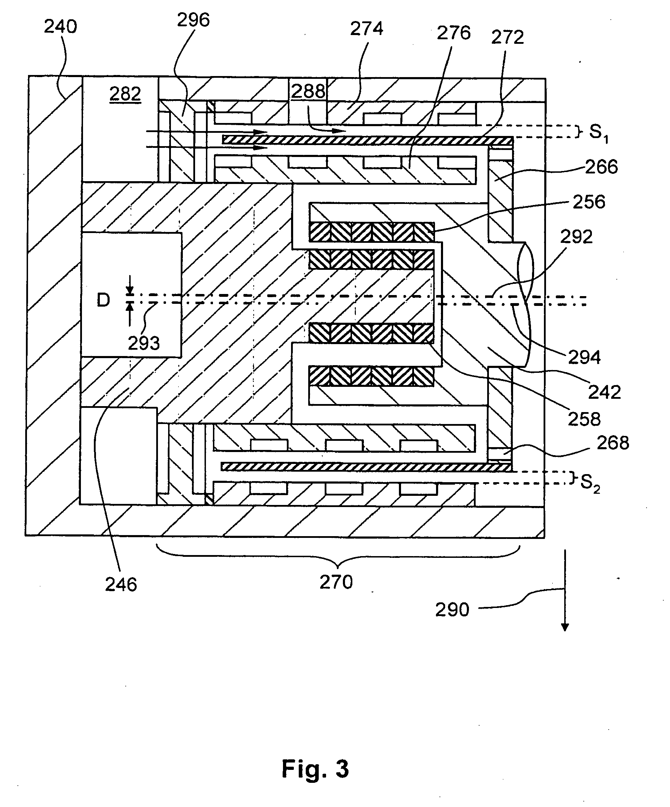

Anhand der Figuren 3 bis 5 sollen nachfolgend Verbesserungen vorgestellt werden, die einzeln oder in Kombination zu einer Vertiefung der Vorteile führen.

In Figur 3 ist der Teil der Vakuumpumpe im Schnitt gezeigt, der die zweite Pumpstufe 270 umfasst. Mit dem Pumpengehäuse 240 ist ein Lagerträger 246 verbunden, der die statorseitigen Magnetringe 258 eines Permanentmagnetlagers haltert. Diesen stehen rotorseitige Magnetringe 256 gegenüber, welche auf der Welle 242 befestigt sind. Ebenfalls an der Welle befestigt ist eine Nabe 266, die einen Holweckzylinder 272 trägt. Die Pumpstufe umfasst hier einen äußeren Holweckstator 274 und einen inneren Holweckstator 276. Der äußere Holweckstator wirkt mit der Außenwand des Holweckzylinders gasfördernd zusammen, der innere Holweckstator mit der Innenwand. Die Nabe besitzt wenigstens ein Loch 268, durch das das auf der Innenseite des Holweckzylinders geförderte Gas hindurch treten und die Pumpstufe verlassen kann. Gas wird vom Einlass 282 auf Innenseite und Außenseite des Holweckzylinders parallel gefördert. Durch einen Einlass 288 gelangt Gas in den Teil der Pumpstufe zwischen äußerem Holweckstator und Holweckzylinder.

Vorteilhaft ist es, bei der Gestaltung parallel pumpender Holweckpumpstufen folgenden Gesichtspunkt bei der Wahl der axialen Ausdehnung des Einlasses 288 zu beachten: die Relativgeschwindigkeit zwischen jeweiligem Holweckzylinder und Holweckstator nimmt mit zunehmendem Abstand zur Wellenachse 294 zu. Damit wird bei höherem Abstand ein höheres Druckverhältnis durch das Zusammenwirken von Holweckzylinder und Holweckstator erzeugt. Dies kann durch den Einlass 288 ausgeglichen werden, über dessen axiale Ausdehung kein Druckverhältnis erzeugt wird. Die Unterschiede im Druckverhältnis können daher ausgeglichen werden. Das Problem der unterschiedlichen Druckverhältnisse ist bei einer Mehrzahl von koaxial angeordneten Holweckzylinder und Holweckstatoren ausgeprägter.

Vor dem Ansaugbereich der Pumpstufe 270 ist ein Leitwert 296 angeordnet, der vorteilhaft als Statorscheibe 296 nach turbomolekularer Bauart gestaltet ist. Sie begrenzt die Rückströmung aus der Pumpstufe in Richtung des Einlasses 282. Dieser Leitwert kann auch unabhängig von einer parallel pumpend gestalteten Pumpstufe 270 benutzt werden.

Eine weitere vorteilhafte Gestaltung, die im Zusammenhang mit den Ausführungsbeispielen und deren Weiterbildungen genutzt werden kann, ist die exzentrische Anordnung von Holweckstator und Lager. Die statorseitigen Magnetringe 258 besitzen eine geometrische Mitte, die die Achse 292 des Lagers bildet. Die Welle ihrerseits besitzt eine Achse 294, der Holweckstator eine Achse 293. Durch sein Eigengewicht wird die Welle in Schwerkraftrichtung 290 gezogen, so dass die Achsen von Lager und Welle um einen Durchhangabstand D gegeneinander verschoben sind. Für die Pumpwirkung ist es vorteilhaft, wenn der Spalt S₁ zwischen Holweckzylinder und Holweckstator in Bezug zur Schwerkraft oberhalb der Welle und der Spalt S₂ zwischen Holweckzylinder und Holweckstator in Bezug zur Schwerkraft unterhalb der Welle möglichst gleich groß sind. Dies wird erreicht, indem die geometrische Achse 293 des Holweckstators und die Achse 292 des Lagers um den Durchgangabstand D exzentrisch zueinander angeordnet sind.

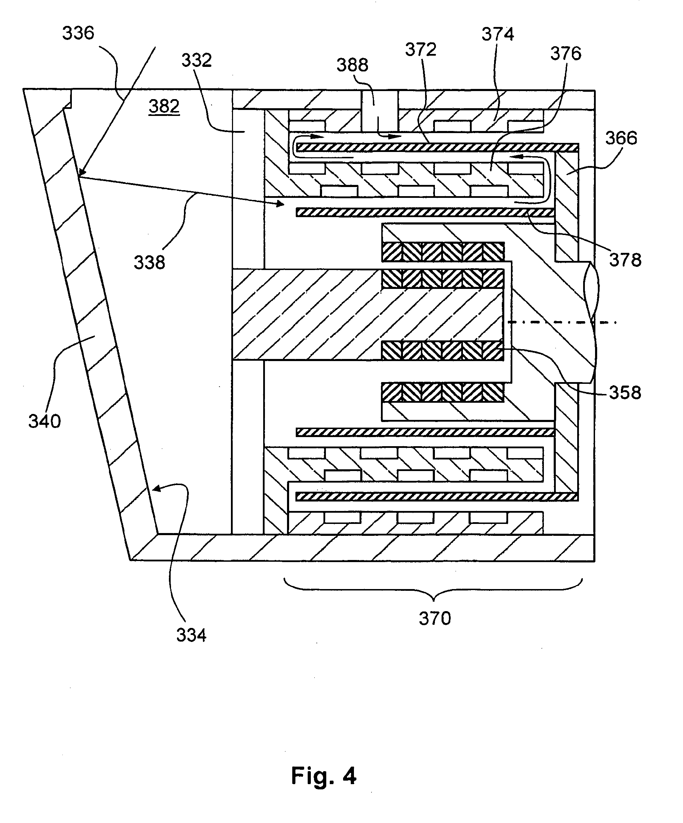

Weitere Gestaltungsmöglichkeiten zeigt Figur 4. Die als Holweckpumpstufe gestaltete zweite Pumpstufe 370 umfasst neben dem Holweckzylinder 372 einen zweiten Holweckzylinder 378, der koaxial zu 372 angeordnet ist. Beide Holweckzylinder 372 und 378 sind mit der Nabe 366 verbunden. Ein innerer Holweckstator 376 ist zwischen den beiden Holweckzylindern angeordnet. Zwischen Außenwand des Holweckzylinders 378 wird vom Einlass 382 kommendes Gas gefördert und an der Nabe 366 derart umgelenkt, dass es zwischen Außenwand des inneren Holweckstators 376 und Innenwand des Holweckzylinders 372 weitergefördert wird. Als dritter seriell gestalteter Pumpabschnitt wird das Gas dann zwischen Außenwand des Holweckzylinders 372 und Innenwand des äußeren Holweckstators 374 gefördert. In diesen Pumpabschnitt strömt Gas aus dem weiteren Einlass 388 in die Pumpstufe ein. Die Gestaltung der Pumpstufe als ineinandergeschachtelte und seriell durchströmte Pumpabschnitte schafft eine nochmals kompakteren Aufbau.

Die Komponenten des Lagers, insbesondere die statorseitigen Magnetringe 358, werden von einem Stern mit mehreren Armen 332 getragen, wodurch eine einfach und kompakte Gestaltung entsteht. Der innere Holweckstator kann an den Armen dieses Sterns befestigt sein. Die Geometrie der Arme ist so gestaltet, dass die Eigenfrequenzen in nicht zur Resonanz gebrachten Bereichen liegen und die Durchbiegung entlang der Wellenachse gering gehalten wird.

Die Innenwand 334 des Pumpengehäuses 340, die der Stirnseite der Welle gegenüber steht, ist vorteilhaft geneigt ausgeführt. Dies verbessert die Förderleistung der Vakuumpumpe, denn es wird die Wahrscheinlichkeit erhöht, dass Moleküle in die Pumpstufe hineingelangen. Beispielsweise tritt ein Molekül aus der Einfallsrichtung 336 kommend durch den Einlass ein und trifft auf die Innenwand 334. Von dort bewegt es sich in Ausfallsrichtung 338 auf die Pumpstufe zu.

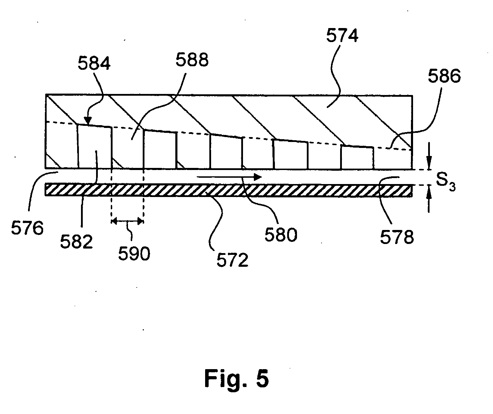

Eine Weiterbildung des Holweckstators ist in Figur 5 gezeigt. Dargestellt ist ein Schnitt entlang der Zylinderachse durch eine Hälfte der Holweckanordnung. Diese wird gebildet durch den Holweckstator 574 und dem Holweckzylinder 572, welche koaxial zueinander angeordnet sind. Zwischen beiden ist ein Spalt S₃ vorgesehen, der zwischen dem Ansaugbereich 576 und dem Ausstoßbereich 578 ein weitgehend konstantes Maß besitzt. Im Holweckstator ist wenigstens ein spiralförmig auf der Holweckstatorinnenseite umlaufender Kanal 582 vorgesehen. Dessen Grund 584 folgt einem Verlauf 586, welcher eine Verringerung des Abstandes von Grund zu Holweckzylinder vorsieht, wobei der maximale Abstand auf Seite des Ansaugbereiches und der minimale Abstand auf Seite des Ausstoßbereiches erreicht wird. Durch diese konische Gestaltung wird das Saugvermögen der Holweckpumpstufe deutlich erhöht, was insbesondere für die zweite Pumpstufe der Ausführungsbeispiele von Vorteil ist. Zwischen jeweils zwei aufeinanderfolgenden Gängen des Kanals bleibt ein Steg 588, welcher eine Breite 590 in axialer Richtung besitzt. Diese Breite kann über die axiale Länge zwischen Ansaugbereich und Ausstoßbereich variieren, ebenso wie die Steigung des Gewindes. Während im Ansaugbereich eine hohe Steigung von Vorteil ist, ist für den Ausstoßbereich eine flachere Steigung günstig. Eine Gestaltung dieser Art erhöht Saugvermögen und Kompression der Holweckpumpstufe.

## Patentansprüche

1. Vakuumpumpe mit einem Pumpengehäuse (40; 140; 240; 340), welches einen ersten Einlass (80; 180) und einen zweiten Einlass (82; 182; 282; 382) aufweist, und mit einer ersten (60; 160) und einer zweiten (70; 170; 270; 370) Pumpstufe, wobei die Vakuumpumpe derart gestaltet ist, dass Gas durch den ersten Einlass in die erste Pumpstufe gelangt, und dass Gas, welches durch den zweiten Einlass in die zweite Pumpstufe gelangt, zunächst von der zweiten und nachfolgend von der ersten Pumpstufe verdichtet wird, **dadurch gekennzeichnet, dass** die zweite Pumpstufe (70; 170; 270; 370) eine Holweckpumpstufe umfasst und dieser im Gasstrom folgend eine Turbomolekularpumpstufe (60; 165, 175) angeordnet ist.

2. Vakuumpumpe nach Anspruch 1, **dadurch gekennzeichnet, dass** die Holweckpumpstufe (70; 170; 270; 370) einen Zylinder (72; 172; 272; 372; 572) umfasst, welcher ein Lager (44; 144) einer Welle (42; 142; 242) wenigstens abschnittsweise umgibt.

3. Vakuumpumpe nach Anspruch 1 oder 2, dadurch gekennzeichet, dass ein weiterer Einlass (188; 288; 388) derart angeordnet ist, dass Gas durch ihn in die Holweckpumpstufe (70; 170; 270; 370) gelangt.

4. Vakuumpumpe nach Anspruch 2, **dadurch gekennzeichnet, dass** ein Holweckstator (74; 174; 274, 276; 374, 376) der Holweckpumpstufe und eine Achse (293) des Lagers um einen Durchhangabstand (D) exzentrisch zueinander angeordnet sind..

5. Vakuumpumpe nach einem der vorhergehenden Ansprüche, **dadurch gekennzeichnet, dass** zwischen zweitem Einlass (82; 182; 282; 382) und Holweckpumpstufe (70; 170; 270; 370) eine nach turbomolekularer Bauart gestaltete Statorscheibe (296) angeordnet ist.

## Claims

1. Vacuum pump comprising a pump housing (40; 140; 240; 340) having a first inlet (80; 180) and a second inlet (82; 182; 282; 382), and also a first (60; 160) and second (70; 170; 270; 370) pumping stage, wherein the vacuum pump is arranged in such a manner that gas passing through the first inlet enters the first pumping stage and such that gas passing through the second inlet and entering the second pumping stage is compressed firstly by the second and subsequently by the first pumping stage, **characterized in that** the second pumping stage (70; 170; 270; 370) comprises a Holweck pump stage and following it in the direction of gas flow is a turbo-molecular pumping stage (60; 165, 175).

2. Vacuum pump according to Claim 1, **characterized in that** the Holweck pump stage (70; 170; 270; 370) comprises a cylinder (72; 172; 272; 372; 572) which surrounds a bearing (44; 1,44) of a shaft (42; 142; 242) at least in sections.

3. Vacuum pump according to Claim 1 or 2, **characterized in that** a further inlet (188; 288; 388) is arranged in such a manner that gas passing therethrough enters the Holweck pump stage (70; 170; 270; 370).

4. Vacuum pump according to Claim 2, **characterized in that** a Holweck stator (74; 174; 274, 276; 374, 376) of the Holweck pump stage and an axis (293) of the bearing are arranged mutually eccentrically with a sag offset (D).

5. Vacuum pump according to any of the preceding Claims, **characterized in that** a stator disk (296) in the form of a turbomolecular structure is arranged between the second inlet (82; 182; 282; 382) and the Holweck pump stage (70; 170; 270; 370).

## Revendications

1. Pompe à vide comprenant un boîtier de pompe (40 ; 140 ; 240 ; 340), lequel comporte une première entrée (80 ; 180) et une deuxième entrée (82 ; 182 ; 282 ; 382), et comprenant un premier (60 ; 160) et un deuxième (70 ; 170 ; 270 ; 370) étage de pompe, la pompe à vide étant configurée de telle sorte que du gaz parvienne dans le premier étage de pompe à travers la première entrée, et de telle sorte que du gaz, qui parvient au deuxième étage de pompe à travers la deuxième entrée, soit comprimé tout d'abord par le deuxième étage de pompe puis par le premier étage de pompe, **caractérisée en ce que** le deuxième étage de pompe (70 ; 170 ; 270 ; 370) comprend un étage de pompe Holweck et celui-ci est disposé à la suite d'un étage de pompe turbomoléculaire (60 ; 165, 175) dans le flux de gaz.

2. Pompe à vide selon la revendication 1, **caractérisée en ce que** l'étage de pompe Holweck (70 ; 170 ; 270 ; 370) comprend un cylindre (72 ; 172 ; 272 ; 372 ; 572), lequel entoure au moins partiellement un palier (44 ; 144) d'un arbre (42 ; 142 ; 242).

3. Pompe à vide selon la revendication 1 ou 2, **caractérisée en ce qu'**une entrée supplémentaire (188 ; 288 ; 388) est disposée de telle sorte que du gaz parvienne, à travers celle-ci, à l'étage de pompe Holweck (70 ; 170 ; 270 ; 370).

4. Pompe à vide selon la revendication 2, **caractérisée en ce qu'**un stator Holweck (74 ; 174 ; 274, 276 ; 374, 376) de l'étage de pompe Holweck et un axe (293) du palier sont disposés de manière excentrée l'un par rapport à l'autre d'une distance de flèche (D).

5. Pompe à vide selon l'une quelconque des revendications précédentes, **caractérisée en ce qu'**un disque de stator (296) configuré suivant un type de construction turbomoléculaire est disposé entre la deuxième entrée (82 ; 182 ; 282 ; 382) et l'étage de pompe Holweck (70 ; 170 ; 270 ; 370).
